# EUROPÄISCHE PATENTSCHRIFT

(11) **EP 4 015 271 B1**
(45) Veröffentlichungstag und Bekanntmachung des Hinweises auf die Patenterteilung: **06.09.2023**
(21) Anmeldenummer: 21204431.7
(22) Anmeldetag: 25.10.2021
(51) Int. Cl.: B60K 5/12, F16F 15/00, F16F 15/08, F16F 1/36, B60K 1/00

(54) **ELASTISCHE LAGERUNG**
ELASTIC MOUNTING
PALIER ÉLASTIQUE

(30) Priorität: 17.12.2020 DE 102020216108
(43) Veröffentlichungstag der Anmeldung: 22.06.2022
(73) Patentinhaber: ContiTech Vibration Control GmbH, 30165 Hannover (DE)
(72) Erfinder: Kuehne, Lukas, 30419 Hannover (DE); Werhahn, Max, 30419 Hannover (DE); Marienfeld, Peter, 30419 Hannover (DE)
(74) Vertreter: Continental Corporation

(56) Entgegenhaltungen:
- DE-A1- 3 902 603
- DE-A1- 3 902 605
- KR-A- 20100 077 657
- US-A- 5 356 123

## Beschreibung

Die vorliegende Erfindung betrifft eine elastische Lagerung gemäß dem Oberbegriff des Patentanspruchs 1 sowie eine schwingungsfähige Vorrichtung mit wenigstens einem derartigen elastischen Lagerung gemäß dem Patentanspruch 11.

Auf verschiedensten technischen Gebieten ist das Auftreten von Schwingungen unerwünscht, da derartige Schwingungen zu zusätzlichen Belastungen der mechanischen Elemente, zur Entstehung von Luftschall in Form von Geräuschen und dergleichen führen können.

Zur Verringerung der Übertragung von hochfrequentem Körperschall wird im Allgemeinen auf die Isolation durch elastische dämpfungsarme Strukturen wie zum Beispiel auf Gummi, d. h. auf vulkanisierten Kautschuk, gesetzt.

Nachteilig hierbei ist, dass die Schwingungsisolation mithilfe von Gummi durch die dynamische Verhärtung von Gummi beschränkt ist, welche bei steigender Frequenz zunimmt. Zudem können im höheren Frequenzbereich Eigenschwingungen im Gummi auftreten, welche das Übertragungsverhalten in einzelnen Frequenzbereichen stark verschlechtern können. Störender Körperschall zum Beispiel von Elektromotoren kann somit nicht im gesamten Spektrum isoliert werden und zu störenden Schwingungsphänomenen führen, welche sich zum Beispiel akustisch als Luftschall, wie zum Beispiel als ein Pfeifen im Fahrgastraum von E-Fahrzeugen (Elektro-Fahrzeugen), äußern können.

Die DE 39 02 605 A1 beschreibt eine elastische Lagerung mit einem zwischen zwei Anschlußteilen angeordneten gummielastischen Federelement zur Abstützung einer schwingenden Last, deren Schwingungsspektrum sowohl niederfrequente als auch hochfrequente Schwingungen enthält, insbesondere Kraftfahrzeug-Motorlager. Dem Federelement ist ein elektrostriktiver oder magnetostriktiver Aktuator in mechanischer Reihenschaltung zugeordnet. Ein die von der schwingenden Last verursachten Wechselkräfte, Wechselbeschleunigungen oder Schwingungsauslenkungen aufnehmender Sensor ist vorgesehen, der über einen Amplituden- und Phasenregler und einen Verstärker an den Aktuator angeschlossen ist, wobei die Regelung so ausgelegt ist, dass der Aktuator eine Minimierung der den Sensor beaufschlagenden Wechselkräfte, Wechselbeschleunigungen bzw. Schwingungsauslenkungen bewirkt.

Vorteilhaft an elektrostriktiven oder magnetostriktiven Aktuatoren zum Beispiel in Form von Piezoelementen ist zwar, dass diese bei geringen Stellwegen vergleichsweise hohe Druckkräfte ausüben sowie eine vergleichsweise hohe Arbeitsgeschwindigkeit aufweisen können, so dass insbesondere Piezoelemente für hochfrequente Anwendungen als Aktuator grundsätzlich besonders geeignet sind.

Nachteilig hieran ist jedoch, dass elektrostriktive oder magnetostriktive Aktuatoren zum Beispiel in Form von Piezoelementen sehr empfindlich gegenüber Quer- und Zugkräften sowie gegenüber Torsions- und Biegemomenten sind, welche zur mechanischen Beschädigung oder Zerstörung der Aktuatoren führen können. Auch sind Piezoelemente selbst vergleichsweise teuer sowie führt deren Verwendung auch durch die entsprechende erforderliche Ansteuerungselektronik zu erheblichen zusätzlichen Kosten. Ferner erfordern derartige Aktuatoren zusätzlichen Bauraum.

Eine weitere elastische Lagerung ist aus der DE 39 02 603 A1 bekannt.

Eine Aufgabe der vorliegenden Erfindung ist es, eine elastische Lagerung der eingangs beschriebenen Art bereitzustellen, so dass die schwingungsdämpfende und bzw. oder schwingungsisolierende Wirkung verbessert werden kann. Dies soll vorzugsweise möglichst einfach, kostengünstig, kompakt und bzw. oder flexibel einsetzbar erfolgen. Zumindest soll eine Alternative zu bekannten elastischen Lagerungen geschaffen werden.

Die Aufgabe wird erfindungsgemäß durch eine elastische Lagerung mit den Merkmalen gemäß Patentanspruch 1 sowie durch eine schwingungsfähige Vorrichtung mit den Merkmalen gemäß Patentanspruch 11 gelöst. Vorteilhafte Weiterbildungen sind in den Unteransprüchen beschrieben.

Somit betrifft die vorliegende Erfindung eine elastische Lagerung, vorzugsweise ein Motorlager oder ein Fahrwerklager, welche ausgebildet ist, schwingungsübertragend zwischen einem ersten Anschlusselement und einem zweiten Anschlusselement einer schwingungsfähigen Vorrichtung angeordnet zu werden. Diese Anschlusselemente können beispielsweise die Halterung eines Fahrwerklagers eines Kraftfahrzeugs auf der einen Seite am Fahrwerk und auf der anderen Seite am Chassis oder die Halterung eines Motorlagers auf der einen Seite am Chassis und auf der anderen Seite am Motor sein. Dies ist jedoch von der jeweiligen Anwendung abhängig.

Die elastische Lagerung weist wenigstens einen elektrostriktiven oder magnetostriktiven Aktuator auf. Unter einem elektrostriktiven Aktuator wird ein Aktuator verstanden, welcher ein dielektrisches Medium aufweist, welche in Abhängigkeit eines angelegten elektrischen Feldes deformiert werden kann. Hierzu kann der elektrostriktive Aktuator vorzugsweise als Piezoaktuator ausgebildet sein, wie weiter unten näher beschrieben werden wird. Unter einem magnetostriktiven Aktuator wird ein Aktuator verstanden, welcher ein magnetisches, vorzugsweise ein ferromagnetisches, Medium aufweist, welche in Abhängigkeit eines angelegten magnetischen Feldes deformiert werden kann. Unter einem Aktuator oder auch Aktor wird eine antriebstechnisches Einheit verstanden, welche ein elektrisches Signal in mechanische Bewegungen bzw. in Veränderungen physikalischer Größen umsetzen und damit aktiv auf einen Prozess einwirken kann. Das entsprechende elektrische Signal kann als Steuerungssignal zum Beispiel von einer Steuerungseinheit erzeugt und zum Aktuator übertragen werden, um dort umgesetzt zu werden.

Die elastische Lagerung weist wenigstens ein gummielastisches Federelement auf. Unter einem Federelement wird allgemein ein technisches Element verstanden, welches sich elastisch verformen kann. Die elastische Verformung kann insbesondere in der Längsrichtung durch Dehnung und Stauchung unter Normalkraft erfolgen. Unter Gummi wird ein Vulkanisat von Natur- und Synthesekautschuk verstanden, welches sich elastisch verformen kann. Hierdurch kann eine Federwirkung erreicht werden. Somit können von außen auf das gummielastische Federelement einwirkende Kräfte und insbesondere Schwingungen vom gummielastischen Material aufgenommen und isoliert oder gedämpft werden.

Das gummielastische Federelement ist ausgebildet, im Kraftfluss zwischen dem ersten Anschlusselement und dem zweiten Anschlusselement angeordnet zu werden. Dies ist allgemein von elastischen Lagerungen bekannt, damit das gummielastische Federelement sowohl kraftübertragend als auch schwingungsdämpfend bzw. schwingungsisolierend zwischen den beiden Anschlusselementen wirken kann.

Der elektrostriktive oder magnetostriktive Aktuator ist ausgebildet, schwingungserregend auf das gummielastische Federelement zu wirken. Mit anderen Worten ist der elektrostriktive oder magnetostriktive Aktuator gegenüber dem gummielastischen Federelement angeordnet, so dass der elektrostriktive oder magnetostriktive Aktuator Kräfte und insbesondere Druckkräfte auf das gummielastische Federelement aufbringen und hierdurch seinerseits Schwingungen in dem Material des gummielastischen Federelements anregen kann.

Eine derartige elastische Lagerung mit Reihenschaltung von elektrostriktivem oder magnetostriktivem Aktuator und gummielastischen Federelement ist beispielsweise aus der DE 39 02 605 A1 bekannt.

Im Unterschied hierzu ist die erfindungsgemäße elastische Lagerung dadurch gekennzeichnet, dass der elektrostriktive oder magnetostriktive Aktuator ausgebildet ist, nur teilweise im Kraftfluss zwischen dem ersten Anschlusselement und dem zweiten Anschlusselement angeordnet zu werden. Unter dem Kraftfluss ist insbesondere der "primäre" Kraftfluss bei Quer- und Zugkräften zu verstehen.

Mit anderen Worten ist das gummielastische Federelement dazu ausgebildet, wie bekannt sowohl kraftübertragend als auch schwingungsdämpfend bzw. schwingungsisolierend zwischen den beiden Anschlusselementen zu wirken. Um die im gummielastischen Federelement hierbei auftretenden Schwingungen beeinflussen und insbesondere eine Übertragung auf das zweite Anschlusselement entgegenwirken zu können, ist der elektrostriktive oder magnetostriktive Aktuator vorgesehen. Der elektrostriktive oder magnetostriktive Aktuator ist dabei ausgebildet und gegenüber dem gummielastischen Federelement angeordnet, so dass der elektrostriktive oder magnetostriktive Aktuator wenigstens Druckkräfte und vorzugsweise ausschließlich Druckkräfte auf das gummielastische Federelement ausüben und hierdurch seinerseits Schwingungen im Material des gummielastischen Federelement hervorrufen kann.

Durch eine geeignete Ansteuerung des elektrostriktiven oder magnetostriktiven Aktuators seitens einer Steuerungseinheit können hierdurch Schwingungen seitens des elektrostriktiven oder magnetostriktiven Aktuators im gummielastischen Federelement angeregt werden, welche denjenigen Schwingungen entgegenwirken können, welche von einem der Anschlusselement auf das gummielastische Federelement wirken können und möglichst nicht auf das andere Anschlusselement übertragen werden sollen. Dies kann die isolierende Wirkung des elastischen Federelements erhöhen. Eine derartige Ansteuerung kann auch durch eine vergleichsweise einfache passive Beschaltung mit ohmschen Widerständen oder ähnlich einfachen elektronischen Bauteilen realisiert werden.

Hierbei den elektrostriktiven oder magnetostriktiven Aktuator außerhalb des Kraftflusses der Quer- und Zugkräfte zwischen den beiden Anschlusselementen anzuordnen kann verhindern, dass die Kräfte bzw. Schwingungen, welche auf das gummielastische Federelement wirken können, auch auf den elektrostriktiven oder magnetostriktiven Aktuator einwirken und diesen beschädigen können. Dies kann bei elektrostriktiven oder magnetostriktiven Aktuator insbesondere durch Biegemomente oder durch Torsionsmomente der Fall sein, was somit erfindungsgemäß vermieden werden kann. Mit anderen Worten kann der elektrostriktive oder magnetostriktive Aktuator seinerseits Kräfte und insbesondere Drucckräfte zur Anregung von Schwingungen auf das gummielastische Federelement ausüben, jedoch keine Kräfte oder Momente seitens des gummielastischen Federelements erhalten. Dies kann die Langlebigkeit des elektrostriktiven oder magnetostriktiven Aktuators erhöhen.

Erfindungsgemäß kann der elektrostriktive oder magnetostriktive Aktuator derart angeordnet werden, um entweder direkt oder indirekt auf das gummielastische Federelement zu wirken. Dies kann den Spielraum der Umsetzung erhöhen.

Gemäß einem Aspekt der Erfindung weist die elastische Lagerung ein Gehäuse auf, welches ausgebildet ist, mit dem ersten Anschlusselement oder mit dem zweiten Anschlusselement verbunden zu werden, wobei das gummielastische Federelement feststehend mit dem Gehäuse verbunden ist und wobei der elektrostriktive oder magnetostriktive Aktuator, vorzugsweise über eine Halterung, feststehend mit dem Gehäuse verbunden ist. Hierdurch können das gummielastische Federelement und der elektrostriktive oder magnetostriktive Aktuator zueinander wie zuvor beschrieben angeordnet werden und gleichzeitig gegenüber einander beweglich sein, damit der elektrostriktive oder magnetostriktive Aktuator Bewegungen ausführen und hierdurch Kräfte und insbesondere Druckkräfte auf das gummielastische Federelement ausüben kann.

Gemäß einem weiteren Aspekt der Erfindung ist der elektrostriktive oder magnetostriktive Aktuator ein Piezoaktuator. Hierdurch kann der inverse Piezoeffekt, welcher die mechanische Verformung eines Piezoelements des Piezoaktuators bei Anlegen einer elektrischen Spannung bewirkt, genutzt werden, um die zuvor beschrieben Eigenschaften und Vorteile umzusetzen.

Gemäß einem weiteren Aspekt der Erfindung ist das gummielastische Federelement ausgebildet, ausschließlich Druckkräfte auf den elektrostriktiven oder magnetostriktiven Aktuator auszuüben. Hierzu können der elektrostriktive oder magnetostriktive Aktuator und das gummielastische Federelement in berührendem Kontakt oder zumindest nahe zueinander beabstandet angeordnet sein, so dass die mechanische Verformung des elektrostriktiven oder magnetostriktiven Aktuators ausreichend auf das gummielastische Federelement wirken kann, um dort Schwingungen anzuregen, wie zuvor beschrieben. Gleichzeitig kann hierdurch verhindert werden, dass seitens des gummielastischen Federelement Zugkräfte auf den elektrostriktiven oder magnetostriktiven Aktuator wirken können, was diesen mechanische stark belasten und hierdurch beschädigen oder sogar zerstören könnte. Dies kann die Wirkung wie zuvor beschrieben gewährleisten und gleichzeitig den elektrostriktiven oder magnetostriktiven Aktuator schützen, was der Langlebigkeit des elektrostriktiven oder magnetostriktiven Aktuators zugutekommen kann.

Gemäß einem weiteren Aspekt der Erfindung der elektrostriktive oder magnetostriktive Aktuator ausgebildet, ausschließlich Druckkräfte auf das gummielastische Federelement auszuüben. Dies kann den zuvor beschrieben Eigenschaften und Vorteilen ebenso seitens des elektrostriktiven oder magnetostriktiven Aktuators förderlich sein.

Gemäß einem weiteren Aspekt der Erfindung ist der elektrostriktive oder magnetostriktive Aktuator auf einer Anregungsseite des gummielastischen Federelements angeordnet. In diesem Fall kann die Wirkung des elektrostriktiven oder magnetostriktiven Aktuator auf der Seite des gummielastischen Federelements als Anregungsseite ausgeübt werden, auf welcher eine Schwingungsanregung erzeugt wird.

Gemäß einem weiteren Aspekt der Erfindung ist der elektrostriktive oder magnetostriktive Aktuator auf einer Anbindungsseite des gummielastischen Federelements angeordnet. In diesem Fall kann die Wirkung des elektrostriktiven oder magnetostriktiven Aktuator auf der Seite des gummielastischen Federelements als Anbindungsseite ausgeübt werden, zu welcher eine Schwingungsanregung über das gummielastische Federelements hinweg übertragen werden wird.

Gemäß einem weiteren Aspekt der Erfindung weist die elastische Lagerung wenigstens einen Sensor auf, welcher ausgebildet ist, im Kraftfluss zwischen dem ersten Anschlusselement und dem zweiten Anschlusselement angeordnet zu werden, wobei der Sensor ausgebildet ist, wenigstens eine Kraft und bzw. oder Beschleunigung in der Richtung des Kraftflusses zu erfassen. Hierzu kann der Sensor im Transferpfad zwischen Anregungsort und Ausprägungsort, d.h. zwischen Anregungsseite und Anbindungsseite des gummielastischen Federelements, angeordnet werden und ausgebildet sein, wenigstens eine Kraft und bzw. oder Beschleunigung korrelierend zur Schwingungsanregung oder -ausprägung zu erfassen. Der Sensor kann aber auch an einer repräsentativen Stelle der Anbindungsseite wie zum Beispiel im Chassis angeordnet sein, sofern ein direkter Transferpfad bzw. eine Korrelation vorliegt.

Auf diese Art und Weise kann sensorisch eine Kraft bzw. Schwingung in der Richtung des Kraftflusses zwischen dem ersten Anschlusselement und dem zweiten Anschlusselement erfasst werden, welche entsprechend auch auf das gummielastische Federelement wirkt. Somit kann die sensorisch erfasste Kraft seitens einer Steuerungseinheit vom Sensor erhalten und genutzt werden, um mittels Steuerung oder Regelung diesen sensorisch erfassten Kraft bzw. Schwingung entgegenzuwirken, indem der elektrostriktive oder magnetostriktive Aktuator entsprechend angesteuert wird. Dies kann die Umsetzung der zuvor beschriebenen Aspekte der Erfindung in Abhängigkeit der sensorisch erfassten Kraft bzw. Schwingung ermöglichen.

Vorzugsweise kann der elektrostriktive oder magnetostriktive Aktuator als Piezoaktuator ausgebildet sein und sowohl als Aktuator als auch als Sensor wie hier beschrieben verwendet werden. Hierzu kann der Piezoaktuator abwechselnd mit der einen Funktion oder mit der anderen Funktion verwendet werden. Beispielsweise kann der Piezoaktuator zum Beispiel 10 s im Aktorbetrieb gefolgt von 1 s im Sensorbetrieb betrieben werden. Hierdurch können beide Funktionen mit lediglich einem Bauteil umgesetzt werden, was Kosten, Bauraum und bzw. oder Gewicht sparen kann.

Gemäß einem weiteren Aspekt der Erfindung ist der Sensor auf der Anregungsseite des gummielastischen Federelements angeordnet. Unter der Anregungsseite eines Lagers ist die Seite relativ zum gummielastischen Federelement zu verstehen, von welcher die zu dämpfenden bzw. zu isolierenden Schwingungen aufgenommen werden sollen. Dies kann eine Möglichkeit einer Anordnung des Sensors relativ zum gummielastischen Federelement darstellen.

Gemäß einem weiteren Aspekt der Erfindung ist der Sensor auf der Anbindungsseite des gummielastischen Federelements angeordnet. Unter der Anbindungsseite eines Lagers ist die Seite relativ zum gummielastischen Federelement zu verstehen, welcher vor den Schwingungen der Anregungsseite geschützt werden soll. Die Anbindungsseite liegt somit der Anregungsseite relativ zum gummielastischen Federelement im Kraftfluss gegenüber. Dies kann eine andere Möglichkeit einer Anordnung des Sensors relativ zum gummielastischen Federelement darstellen, bei welcher die Kräfte, Beschleunigungen bzw. Schwingungen sensorisch erfassten werden können, was der Genauigkeit der sensorisch erfassten Werte zugutekommen und die Qualität der weiteren zuvor beschriebenen Schritte erhöhen kann. Hierzu können der Sensor und das gummielastische Federelement stoffschlüssig in der Richtung des Kraftflusses miteinander verbunden sein, um ein haltbare Anordnung zueinander zu erreichen sowie um die Kraftübertragung zu begünstigen.

Die vorliegende Erfindung betrifft auch eine schwingungsfähige Vorrichtung, vorzugsweise ein Kraftfahrzeug, besonders vorzugsweise ein elektrisches Kraftfahrzeug, mit einem ersten Anschlusselement, mit einem zweiten Anschlusselement und mit wenigstens einer elastischen Lagerung wie zuvor beschrieben, welche schwingungsübertragend zwischen dem ersten Anschlusselement und dem zweiten Anschlusselement angeordnet ist. Hierdurch kann eine zuvor beschrieben erfindungsgemäße elastische Lagerung bei einer schwingungsfähigen Vorrichtung, welche insbesondere ein Kraftfahrzeug bzw. elektrisches Kraftfahrzeug aber auch eine industrielle Anwendung wie beispielsweise eine Maschine sein kann, umgesetzt werden, um dort die zuvor beschrieben Eigenschaften und Vorteile anwenden und nutzen zu können. Dies kann insbesondere bei Kraftfahrzeugen und insbesondere bei elektrischen Kraftfahrzeugen insbesondere zur Vermeidung von Geräuschen im Fahrgastraum genutzt werden.

Mehrere Ausführungsbeispiele und weitere Vorteile der Erfindung werden nachstehend im Zusammenhang mit den folgenden Figuren erläutert. Darin zeigt:
- Figur 1: eine schematische Schnittdarstellung einer schwingungsfähigen Vorrichtung mit einer erfindungsgemäßen elastischen Lagerung gemäß eines ersten Ausführungsbeispiels;
- Figur 2: eine schematische Schnittdarstellung einer schwingungsfähigen Vorrichtung mit einer erfindungsgemäßen elastischen Lagerung gemäß eines zweiten Ausführungsbeispiels; und
- Figur 3: eine schematische Schnittdarstellung einer schwingungsfähigen Vorrichtung mit einer erfindungsgemäßen elastischen Lagerung gemäß eines dritten Ausführungsbeispiels.

Die Beschreibung der o.g. Figuren erfolgt in kartesischen Koordinaten mit einer Längsrichtung (nicht dargestellt), einer zur Längsrichtung senkrecht ausgerichteten Querrichtung Y sowie einer sowohl zur Längsrichtung als auch zur Querrichtung Y senkrecht ausgerichteten vertikalen Richtung Z. Die Längsrichtung kann auch als Tiefe, die Querrichtung Y auch als Breite Y und die vertikale Richtung Z auch als Höhe Z bezeichnet werden. Die Längsrichtung und die Querrichtung Y bilden gemeinsam die Horizontale, X, Y, welche auch als horizontale Ebene X, Y bezeichnet werden kann. Die Längsrichtung, die Querrichtung Y und die vertikale Richtung Z können gemeinsam auch als Raumrichtungen X, Y, Z bzw. als kartesische Raumrichtungen X, Y, Z bezeichnet werden.

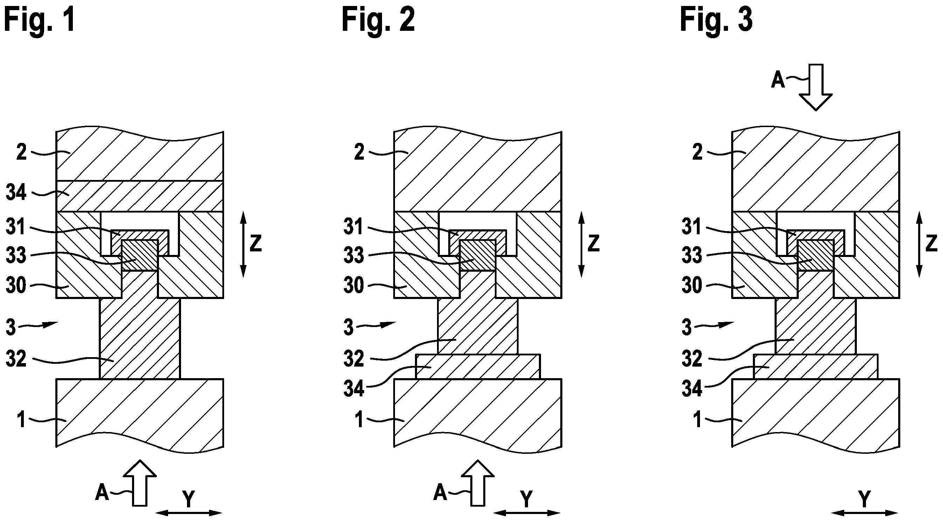

Figur 1 zeigt eine schematische Schnittdarstellung einer schwingungsfähigen Vorrichtung mit einer erfindungsgemäßen elastischen Lagerung 3 gemäß eines ersten Ausführungsbeispiels. Gemäß des betrachteten Ausführungsbeispiels ist die schwingungsfähige Vorrichtung ein elektrisch betriebenes Kraftfahrzeug (nicht dargestellt) und die elastische Lagerung 3 ist ein Motorlager 3. Ein erstes Anschlusselement 1 des Kraftfahrzeugs ist somit dessen Motor 1 oder eine Unterbaugruppe inkl. Motor 1 und ein zweites Anschlusselement 2 des Kraftfahrzeugs ist dessen Chassis 2 oder Kabine 2.

Das Motorlager 3 weist ein Gehäuse 30 auf, welches auf der einen Seite, in der Darstellung der Figur 1 in der vertikalen Richtung Z nach oben hin, dem Chassis 2 zugewandt und mit diesem feststehend verbunden ist, wobei gemäß des ersten Ausführungsbeispiels ein Sensor 34 als Kraftsensor 34 zwischen dem Gehäuse 30 und dem Chassis 2 angeordnet ist. Gegenüberliegend ist das Gehäuse 30 stoffschlüssig mit einem gummielastischen Federelement 32 in Form einer Gummifeder 32 verbunden. Das Gehäuse 30 und die Gummifeder 32 sind zylindrisch entlang einer Längsachse (nicht dargestellt) ausgebildet, welche sich in der vertikalen Richtung Z erstreckt. Dies gilt ebenso für eine mittige Aussparung (nicht bezeichnet) des Gehäuses 30, in welche die Gummifeder 32 hineinragt. Hierdurch kann sowohl ein formschlüssiger als auch stoffschlüssiger Halt zwischen Gummifeder 32 und Gehäuse 30 erreicht werden.

Innerhalb der Aussparung des Gehäuses 30 ist in der vertikalen Richtung Z von oben ebenfalls ein elektrostriktiver oder magnetostriktiver Aktuator 33 in Form eines Piezoaktuators 33 angeordnet, welcher in der vertikalen Richtung Z von oben flächig an der Gummifeder 32 anliegt, ohne jedoch mit der Gummifeder 32 verbunden zu sein. In der vertikalen Richtung Z von oben wird der Piezoaktuator 33 durch eine Halterung 31 in Position gehalten. Die Halterung 31 ist feststehend mit dem Gehäuse 30 verbunden und innerhalb einer zylindrischen Aussparung (nicht bezeichnet) angeordnet, welche in der vertikalen Richtung Z nach oben hin offen ausgebildet ist bzw. im montierten Zustand gemäß des ersten Ausführungsbeispiels der Figur 1 vom Kraftsensor 34 abgeschlossen wird.

In der vertikalen Richtung Z ist die Gummifeder 32 auf dem Motor 1 angeordnet und wird dort mechanisch befestigt oder stoffschlüssig gehalten. Somit stellt das erfindungsgemäße Motorlager 3 eine kraft- und schwingungsübertragende Verbindung zwischen dem Motor 1 und dem Chassis 2 im Wesentlichen in der vertikalen Richtung Z dar.

Bei dieser Kraft- bzw. Schwingungsübertragung können Schwingungsanregungen A, welche gemäß des ersten Ausführungsbeispiels der Figur 1 vom Motor 1 ausgehen können, vom Motor 1 über die Gummifeder 32 und über das Gehäuse 30 als Kraftfluss auf den Chassis 2 übertragen werden. Der Motor 1 kann daher als Anregungsseite und das Chassis 2 als Anbindungsseite des Motorlagers 3 bezeichnet werden.

Die Schwingungen, welche aus den Schwingungsanregungen A resultieren, können hierbei sensorisch vom Kraftsensor 34 erfasst werden, welcher in diesem Fall auf der Anbindungsseite des Motorlagers 3 angeordnet ist. Die sensorisch erfassten Kräfte, Beschleunigungen bzw. Schwingungen können dann seitens einer Steuerungseinheit (nicht dargestellt) zum Beispiels im Rahmen einer Regelung verwendet werden, um eine geregelte Gegenschwingung zu erzeugen, welche vom Piezoaktuator 33 dann in der vertikalen Richtung Z auf die Gummifeder 32 ausgeübt wird und somit die Schwingungen innerhalb der Gummifeder 32 reduzieren kann. Dies kann die Schwingungsanregungen A, welche vom Motor 1 als Anregungsseite ausgehen, dämpfen und somit vom Chassis 2 teilweise fernhalten. Dies kann den Komfort der Insassen erhöhen.

Dabei den Piezoaktuator 33 außerhalb des Kraftflusses im Sinne eines "primären" Kraftflusses bei Quer- und Zugkräften anzuordnen und von dort ausschließlich durch Drucckräfte auf die Gummifeder 32 wirken zu lassen, kann die Umsetzung der zuvor beschriebenen dämpfenden Wirkung ermöglichen und gleichzeitig den Piezoaktuator 33 vor Zugkräften, Torsionsmomenten und Biegemomenten schützen, da diese von der Gummifeder 32 nicht auf den Piezoaktuator 33 ausgeübt werden können. Dies kann die Langlebigkeit des mechanisch empfindlichen Piezoaktuators 33 ausreichend erhöhen, so dass eine Nutzung wie zuvor beschrieben hierdurch überhaupt erst ermöglicht werden kann.

Figur 2 zeigt eine schematische Schnittdarstellung einer schwingungsfähigen Vorrichtung mit einer erfindungsgemäßen elastischen Lagerung 3 gemäß eines zweiten Ausführungsbeispiels. In diesem Fall ist der Kraftsensor 34 in der vertikalen Richtung Z zwischen dem Motor 1 und der Gummifeder 32 und somit auf der Anregungsseite des Motorlagers 3 angeordnet, was die Erfassung der Kräfte bzw. Schwingungen verbessern und sich damit positiv auf das zuvor beschriebene Vorgehen auswirken kann.

Figur 3 zeigt eine schematische Schnittdarstellung einer schwingungsfähigen Vorrichtung mit einer erfindungsgemäßen elastischen Lagerung 3 gemäß eines dritten Ausführungsbeispiels. In diesem Fall erfolgt die Schwingungsanregung A in der vertikalen Richtung Z von oben, indem das erste Anschlusselement 1 ein Chassis 1 und das zweite Anschlusselement 2 ein Motor 2 eines elektrischen Kraftfahrzeugs ist. In diesem Fall stellt der Motor 2 die Anregungsseite und das Chassis 1 die Anbindungsseite des Motorlagers 3 dar. Der Sensor 34, vorzugsweise als Kraftsensor 34, befindet sich in diesem Fall auf der Anbindungsseite des Motorlagers 3. Dies ermöglicht die Umsetzung der zuvor beschrieben Eigenschaften und Vorteile auch bei einer derartigen Anwendung.

### Bezugszeichenliste (Teil der Beschreibung)

- A: Schwingungsanregung

- Y: Querrichtung; Breite
- Z: vertikale Richtung; Höhe
- X, Y: Horizontalen; horizontale Ebene

- 1: erstes Anschlusselement; Motor; Chassis

- 2: zweites Anschlusselement; Chassis; Kabine

- 3: elastische Lagerung; Fahrwerklager; Motorlager
- 30: Gehäuse
- 31: Halterung
- 32: gummielastisches Federelement; Gummifeder
- 33: elektrostriktiver oder magnetostriktiver Aktuator; Piezoaktuator
- 34: Sensor; Kraftsensor

## Patentansprüche

1. Elastische Lagerung (3), vorzugsweise Motorlager (3),
welche ausgebildet ist, schwingungsübertragend zwischen einem ersten Anschlusselement (1) und einem zweiten Anschlusselement (2) einer schwingungsfähigen Vorrichtung angeordnet zu werden,
mit wenigstens einem elektrostriktiven oder magnetostriktiven Aktuator (33) und mit wenigstens einem gummielastischen Federelement (32),
wobei der elektrostriktive oder magnetostriktive Aktuator (33) ausgebildet ist, schwingungserregend auf das gummielastische Federelement (32) zu wirken, und wobei das gummielastische Federelement (32) ausgebildet ist, im Kraftfluss zwischen dem ersten Anschlusselement (1) und dem zweiten Anschlusselement (2) angeordnet zu werden,
**dadurch gekennzeichnet, dass**
der elektrostriktive oder magnetostriktive Aktuator (33) ausgebildet ist, nur teilweise im Kraftfluss zwischen dem ersten Anschlusselement (1) und dem zweiten Anschlusselement (2) angeordnet zu werden.

2. Elastische Lagerung (3) nach Anspruch 1, **gekennzeichnet durch**
ein Gehäuse (30), welches ausgebildet ist, mit dem ersten Anschlusselement (1) oder mit dem zweiten Anschlusselement (2) verbunden zu werden,
wobei das gummielastische Federelement (32) feststehend mit dem Gehäuse (30) verbunden ist und
wobei der elektrostriktive oder magnetostriktive Aktuator (33), vorzugsweise über eine Halterung (31), feststehend mit dem Gehäuse (30) verbunden ist.

3. Elastische Lagerung (3) nach Anspruch 1 oder 2, **dadurch gekennzeichnet, dass** der elektrostriktive oder magnetostriktive Aktuator (33) ein Piezoaktuator (33) ist.

4. Elastische Lagerung (3) nach einem der vorangehenden Ansprüche, **dadurch gekennzeichnet, dass**
das gummielastische Federelement (32) ausgebildet ist, ausschließlich Druckkräfte auf den elektrostriktiven oder magnetostriktiven Aktuator (33) auszuüben.

5. Elastische Lagerung (3) nach einem der vorangehenden Ansprüche, **dadurch gekennzeichnet, dass**
der elektrostriktive oder magnetostriktive Aktuator (33) ausgebildet ist, ausschließlich Druckkräfte auf das gummielastische Federelement (32) auszuüben.

6. Elastische Lagerung (3) nach einem der vorangehenden Ansprüche, **dadurch gekennzeichnet, dass**
der elektrostriktive oder magnetostriktive Aktuator (33) auf einer Anregungsseite des gummielastischen Federelements (32) angeordnet ist.

7. Elastische Lagerung (3) nach einem der Ansprüche 1 bis 5, **dadurch gekennzeichnet, dass**
der elektrostriktive oder magnetostriktive Aktuator (33) auf einer Anbindungsseite des gummielastischen Federelements (32) angeordnet ist.

8. Elastische Lagerung (3) nach einem der vorangehenden Ansprüche, **gekennzeichnet durch**
wenigstens einen Sensor (34), welcher ausgebildet ist, im Kraftfluss zwischen dem ersten Anschlusselement (1) und dem zweiten Anschlusselement (2) angeordnet zu werden,
wobei der Sensor (34) ausgebildet ist, wenigstens eine Kraft und/oder Beschleunigung in der Richtung des Kraftflusses zu erfassen.

9. Elastische Lagerung (3) nach Anspruch 8, **dadurch gekennzeichnet, dass** der Sensor (34) auf der Anregungsseite des gummielastischen Federelements (32) angeordnet ist.

10. Elastische Lagerung (3) nach Anspruch 8, **dadurch gekennzeichnet, dass** der Sensor (34) auf der Anbindungsseite des gummielastischen Federelements (32) angeordnet ist.

11. Schwingungsfähige Vorrichtung, vorzugsweise Kraftfahrzeug, besonders vorzugsweise elektrisches Kraftfahrzeug,
mit einem ersten Anschlusselement (1),
mit einem zweiten Anschlusselement (2) und
mit wenigstens einer elastischen Lagerung (3) nach einem der vorangehenden Ansprüche, welche schwingungsübertragend zwischen dem ersten Anschlusselement (1) und dem zweiten Anschlusselement (2) angeordnet ist.

## Claims

1. Elastic mounting (3), preferably a motor bearing (3),
which is designed to be arranged between a first connection element (1) and a second connection element (2) of a vibratory device in such a way as to transmit vibrations,
with at least one electrostrictive or magnetostrictive actuator (33) and with at least one rubber-elastic spring element (32),
the electrostrictive or magnetostrictive actuator (33) being designed to act on the rubber-elastic spring element (32) in such a way as to excite vibrations, and
the rubber-elastic spring element (32) being designed to be arranged in the force flow between the first connection element (1) and the second connection element (2),
**characterized in that**
the electrostrictive or magnetostrictive actuator (33) is designed to be arranged only partially in the force flow between the first connection element (1) and the second connection element (2).

2. Elastic mounting (3) according to Claim 1, **characterized by**
a housing (30), which is designed to be connected to the first connection element (1) or to the second connection element (2),
the rubber-elastic spring element (32) being fixedly connected to the housing (30) and
the electrostrictive or magnetostrictive actuator (33) being fixedly connected to the housing (30), preferably by way of a bracket (31).

3. Elastic mounting (3) according to Claim 1 or 2, **characterized in that**
the electrostrictive or magnetostrictive actuator (33) is a piezoactuator (33).

4. Elastic mounting (3) according to one of the preceding claims, **characterized in that**
the rubber-elastic spring element (32) is designed to exclusively exert compressive forces on the electrostrictive or magnetostrictive actuator (33).

5. Elastic mounting (3) according to one of the preceding claims, **characterized in that**
the electrostrictive or magnetostrictive actuator (33) is designed to exclusively exert compressive forces on the rubber-elastic spring element (32).

6. Elastic mounting (3) according to one of the preceding claims, **characterized in that**
the electrostrictive or magnetostrictive actuator (33) is arranged on an excitation side of the rubber-elastic spring element (32).

7. Elastic mounting (3) according to one of Claims 1 to 5, **characterized in that**
the electrostrictive or magnetostrictive actuator (33) is arranged on an attachment side of the rubber-elastic spring element (32).

8. Elastic mounting (3) according to one of the preceding claims, **characterized by** at least one sensor (34), which is designed to be arranged in the force flow between the first connection element (1) and the second connection element (2), the sensor (34) being designed to sense at least one force and/or acceleration in the direction of the force flow.

9. Elastic mounting (3) according to Claim 8, **characterized in that**
the sensor (34) is arranged on the excitation side of the rubber-elastic spring element (32).

10. Elastic mounting (3) according to Claim 8, **characterized in that**
the sensor (34) is arranged on the attachment side of the rubber-elastic spring element (32).

11. Vibratory device, preferably a motor vehicle, particularly preferably an electric motor vehicle,
with a first connection element (1),
with a second connection element (2) and
with at least one elastic mounting (3) according to one of the preceding claims, which is arranged between the first connection element (1) and the second connection element (2) in such a way as to transmit vibrations.

## Revendications

1. Suspension élastique (3), de préférence palier de moteur (3), qui est conçue pour être disposée, de manière à transmettre des vibrations, entre un premier élément de raccordement (1) et un deuxième élément de raccordement (2) d'un dispositif apte à osciller, ladite suspension comprenant
au moins un actionneur électrostrictif ou magnétostrictif (33) et
au moins un élément à ressort élastique caoutchouteux (32),
l'actionneur électrostrictif ou magnétostrictif (33) étant conçu pour provoquer des vibrations sur l'élément à ressort élastique caoutchouteux (32), et
l'élément à ressort élastique caoutchouteux (32) étant conçu pour être disposé dans le flux de force entre le premier élément de raccordement (1) et le deuxième élément de raccordement (2),
**caractérisée en ce que**
l'actionneur électrostrictif ou magnétostrictif (33) est conçu pour n'être disposé que partiellement dans le flux de force entre le premier élément de raccordement (1) et le deuxième élément de raccordement (2).

2. Suspension élastique (3) selon la revendication 1, **caractérisée par** un boîtier (30) qui est conçu pour être relié au premier élément de raccordement (I) ou au deuxième élément de raccordement (2),
l'élément à ressort élastique caoutchouteux (32) étant relié de manière fixe au boîtier (30) et
l'actionneur électrostrictif ou magnétostrictif (33) étant relié de manière fixe au boîtier (30), de préférence par le biais d'un support (31).

3. Suspension élastique (3) selon la revendication 1 ou 2, **caractérisée en ce que** l'actionneur électrostrictif ou magnétostrictif (33) est un actionneur piézoélectrique (33).

4. Suspension élastique (3) selon l'une des revendications précédentes, **caractérisée en ce que** l'élément à ressort élastique caoutchouteux (32) est conçu pour exercer exclusivement des forces de compression sur l'actionneur électrostrictif ou magnétostrictif (33).

5. Suspension élastique (3) selon l'une des revendications précédentes, **caractérisée en ce que** l'actionneur électrostrictif ou magnétostrictif (33) est conçu pour exercer exclusivement des forces de compression sur l'élément à ressort élastique caoutchouteux (32).

6. Suspension élastique (3) selon l'une des revendications précédentes, **caractérisée en ce que** l'actionneur électrostrictif ou magnétostrictif (33) est disposé sur un côté d'excitation de l'élément à ressort élastique caoutchouteux (32).

7. Suspension élastique (3) selon l'une des revendications 1 à 5, **caractérisée en ce que** l'actionneur électrostrictif ou magnétostrictif (33) est disposé sur un côté de liaison de l'élément à ressort élastique caoutchouteux (32).

8. Suspension élastique (3) selon l'une des revendications précédentes, **caractérisée par** au moins un capteur (34) qui est conçu pour être disposé dans le flux de force entre le premier élément de raccordement (1) et le deuxième élément de raccordement (2),
le capteur (34) étant conçu pour détecter au moins une force et/ou une accélération dans la direction du flux de force.

9. Suspension élastique (3) selon la revendication 8, **caractérisée en ce que** le capteur (34) est disposé du côté d'excitation de l'élément à ressort élastique caoutchouteux (32).

10. Suspension élastique (3) selon la revendication 8, **caractérisée en ce que** le capteur (34) est disposé du côté de liaison de l'élément à ressort élastique caoutchouteux (32).

11. Dispositif apte à osciller, de préférence un véhicule automobile, de manière particulièrement préférée un véhicule automobile électrique, comprenant
un premier élément de raccordement (1),
un deuxième élément de raccordement (2) et
au moins une suspension élastique (3) selon l'une des revendications précédentes, qui est disposée, de manière à transmettre des vibrations, entre le premier élément de raccordement (1) et le deuxième élément de raccordement (2).
